# EUROPEAN PATENT SPECIFICATION

(11) **EP 3 979 709 B1**
(45) Date of publication and mention of the grant of the patent: **05.06.2024**
(21) Application number: 21197703.8
(22) Date of filing: 10.04.2017
(51) Int. Cl.: H04W 40/20, H04L 12/46, H04L 49/00, H04L 49/354

(54) **DYNAMIC MULTI-DESTINATION TRAFFIC MANAGEMENT IN A DISTRIBUTED TUNNEL ENDPOINT**
DYNAMISCHE MULTI-DESTINATION-VERKEHRSVERWALTUNG IN EINEM VERTEILTEN TUNNELENDPUNKT
GESTION DYNAMIQUE DE TRAFIC MULTI-DESTINATION DANS UN POINT D'EXTRÉMITÉ DE TUNNEL DISTRIBUÉ

(30) Priority: 21.04.2016 IN 201641013840; 28.10.2016 US 201615338088
(43) Date of publication of application: 06.04.2022
(62) Divisional of application: 17786347.9
(73) Proprietor: Avago Technologies International Sales Pte. Limited, Singapore 768923 (SG)
(72) Inventor: Anand, Jessu Paul S., 560066 Bangalore (IN); Chikkamath, Shivalingayya, 560037 Bangalore (IN); Raman, Mythilikanth, San Jose, 95131 (US)
(74) Representative: Bosch Jehle Patentanwaltsgesellschaft mbH

(56) References cited:
- EP-A1- 2 940 952
- US-A1- 2014 362 854
- US-A1- 2015 023 359
- US-B1- 8 804 732

## Description

### BACKGROUND

### Field

The present disclosure relates to communication networks. More specifically, the present disclosure relates to a system and a method for dynamic multi-destination traffic management in a distributed tunnel endpoint.

### Related Art

The exponential growth of the Internet has made it a popular delivery medium for a variety of applications running on physical and virtual devices. Such applications have brought with them an increasing demand for bandwidth. As a result, equipment vendors race to build larger and faster switches with versatile capabilities, such as efficient forwarding of multidestination (e.g., broadcast, unknown unicast, and multicast) traffic. However, the capabilities of a switch cannot grow infinitely. It is limited by physical space, power consumption, and design complexity, to name a few factors. Furthermore, switches with higher capability are usually more complex and expensive. As a result, increasing efficiency in existing capabilities of a switch adds significant value proposition.

Typically, to facilitate a service to a network, a service tunnel is established between a switch in the network and a service node providing the service. To ensure high availability, instead of a single switch establishing the tunnel, the network may establish such service tunnels from a distributed tunnel endpoint (DTE) in the network. A distributed tunnel endpoint can include a plurality of switches operating as a single, logical tunnel endpoint. A tunnel endpoint for a tunnel can originate or terminate tunnel forwarding for the tunnel.

While a distributed tunnel endpoint brings many desirable features to service tunnels, some issues remain unsolved in facilitating efficient forwarding of multi-destination traffic via service tunnels from a distributed tunnel endpoint.

EP 2 940 952 Al discloses a system that stores in a first table a first mapping between a first switch identifier and a next-hop switch identifier for the first switch identifier, and in a second table a second mapping between the first switch identifier and a first MAC address of a remote device. The computing system encapsulates a packet, which has first MAC address as a destination address, in an encapsulation header with the first switch identifier as an egress switch identifier of the encapsulation header, and forwards this encapsulated packet in a network of interconnected switches based on the first encapsulation header.

US 2015/023359 A1 discloses an edge adaptor module as a member of in a fabric switch that includes a plurality of switches and operates as a single switch, wherein a storage device stores a first table comprising a first mapping between a first edge identifier and a switch identifier. The storage device also stores a second table comprising a second mapping between the first edge identifier and a media access control (MAC) address of a local device. An encapsulation module encapsulates a packet in a fabric encapsulation with the first edge identifier as the ingress switch identifier of the encapsulation header.

US 2014/362854 A1 discloses a switch including an edge multicast module and an inter-switch multicast module that identifies for a first replication of a multicast packet an egress inter-switch port in a multicast tree rooted at the switch. The multicast tree is identified by an identifier of the switch, and the edge multicast module identifies an egress edge port for a second replication of the multicast packet based on a multicast group identifier that is local within the switch.

US 8,804,732 B1 discloses a wireless access point controller configured to receive information associated with a topology of a network including information associated with which access switch from a set of access switches each virtual local area network (VLAN) from a set of VLANs is associated. The wireless access point controller associates each VLAN from the set of VLANs with a unique tunnel identifier from a set of tunnel identifiers, and provides each wireless access point from a set of wireless access points control information including the set of tunnel identifiers such that a wireless access point from the set of wireless access points can send a data packet received from a wireless device to an access switch from the set of access switches associated with a destination VLAN from the set of VLANs using the tunnel identifier associated with the destination VLAN.

**SUMMARY** [0005] The present invention is defined in the appended independent claims to which reference should be made. Advantageous features are set out in the appended dependent claims.

One embodiment of the present invention provides a switch. The switch includes a storage device, a mapping module, and a packet processor. During operation, the mapping module maintains a first and a second mappings. The first mapping, which can be in the storage device, is between a first service tunnel identifier and a first virtual local area network (VLAN) identifier. The second mapping is between the first VLAN identifier and an indicator, which indicates whether the switch is elected as a designated forwarder of multi-destination traffic for the first service tunnel identifier. If the indicator indicates that the switch is the designated forwarder of multi-destination traffic for the first service tunnel identifier, the packet processor determines an egress port, which corresponds to the first service tunnel, for a packet belonging to multi-destination traffic of the first VLAN.

In a variation on this embodiment, the switch also includes a tunnel management module, which operates the switch as a distributed tunnel endpoint in conjunction with a second switch for a plurality of service tunnels. The switch and the second switch are associated with an Internet Protocol (IP) address indicating the distributed tunnel endpoint.

In a further variation, the packet processor encapsulates the packet with an encapsulation header and sets the IP address as a source address of the encapsulation header.

In a further variation, the tunnel management module elects a distribution master from the first and second switches. The distribution master is responsible for generating the first mapping and sharing the first mapping with other switches in the distributed tunnel endpoint. These other switches are precluded from generating the first mapping.

In a variation on this embodiment, the mapping module maintains, in the storage device, a third mapping between a second VLAN identifier and a second indicator, which indicates that the switch is not a designated forwarder of multi-destination traffic for a second service tunnel identifier.

In a further variation, the packet processor is precluded from determining a second egress port corresponding to the second service tunnel for a packet belonging to multi-destination traffic of the second VLAN.

In a variation on this embodiment, the first mapping is based on one or more of: a number of tunnels, a number of VLANs, and a traffic volume of a respective tunnel.

In a variation on this embodiment, the second mapping is stored in the forwarding table of the switch. The first VLAN identifier then includes a multicast group identifier for the first VLAN.

### Brief description of the figures

FIG. 1A illustrates an exemplary distributed tunnel endpoint with dynamic multi-destination traffic management support, in accordance with an embodiment of the present invention.
FIG. 1B illustrates an exemplary virtual switch representing a distributed tunnel endpoint with dynamic multi-destination traffic management support, in accordance with an embodiment of the present invention.
FIG. 2A illustrates exemplary tables for facilitating dynamic multi-destination traffic management in a distributed tunnel endpoint, in accordance with an embodiment of the present invention.
FIG. 2B illustrates an exemplary addition of a tunnel to the tables facilitating dynamic multi-destination traffic management in a distributed tunnel endpoint, in accordance with an embodiment of the present invention.
FIG. 2C illustrates an exemplary deletion of a tunnel from the tables facilitating dynamic multi-destination traffic management in a distributed tunnel endpoint, in accordance with an embodiment of the present invention.
FIG. 2D illustrates an exemplary deletion of a virtual local area network (VLAN) from the tables facilitating dynamic multi-destination traffic management in a distributed tunnel endpoint, in accordance with an embodiment of the present invention.
FIG. 3A presents a flowchart illustrating an exemplary process of a switch dynamically determining VLAN and tunnel mappings for multi-destination traffic, in accordance with an embodiment of the present invention.
FIG. 3B presents a flowchart illustrating an exemplary process of a switch updating VLAN and tunnel mappings for multi-destination traffic, in accordance with an embodiment of the present invention.
FIG. 4 presents a flowchart illustrating an exemplary process of a switch in a distributed tunnel endpoint forwarding a multi-destination packet, in accordance with an embodiment of the present invention.
FIG. 5 presents a flowchart illustrating an exemplary failure recovery process of a switch in a distributed tunnel endpoint, in accordance with an embodiment of the present invention.
FIG. 6 illustrates an exemplary switch of a distributed tunnel endpoint with dynamic multi-destination traffic management support, in accordance with an embodiment of the present invention.

In the figures, like reference numerals refer to the same figure elements.

### DETAILED DESCRIPTION

The following description is presented to enable any person skilled in the art to make and use the invention, and is provided in the context of a particular application and its requirements. To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

### Overview

In embodiments of the present invention, the problem of efficiently forwarding multi-destination traffic from a distributed tunnel endpoint to service nodes via service tunnels is solved by (i) dynamically mapping virtual local area networks (VLANs) to the tunnels; and (ii) allocating a designated forwarder of BUM traffic for each tunnel. Multi-destination traffic can also be referred to as broadcast, unknown unicast, and multicast (BUM) traffic. Typically, such traffic is forwarded to multiple destinations. Here, a service node can be any node (e.g., a server or a network appliance) that provides a service to a switch or a network. A distributed tunnel endpoint can include a plurality of switches operating as a single, logical tunnel endpoint sharing a common tunnel address (e.g., a virtual Internet Protocol (IP) address).

With existing technologies, if a distributed tunnel endpoint operates as a tunnel endpoint for a plurality of tunnels, one of these tunnels is elected as a designated forwarder of BUM traffic. This tunnel is designated to carry BUM traffic belonging to a respective VLAN associated with the distributed tunnel endpoint. As a result, other tunnels may remain underutilized. Furthermore, if the designated tunnel or the service node associated with the designated tunnel fails, another tunnel (and its service node) is selected as the new designated forwarder of BUM traffic. This leads to reprogramming of a respective VLAN (e.g., reprogramming of multicast group identifiers associated with that VLAN) for that newly selected tunnel. Such a migration can be intensive for a large number of VLANs and cause delay in traffic switchover.

To solve this problem, switches operating as the distributed tunnel endpoint select one of the switches as a distribution master (can also be referred to as a DN master). In some embodiments, the switch with the lowest (or highest) switch identifier value is selected as the distribution master. Since any switch in the distributed tunnel endpoint can operate as the tunnel endpoint (e.g., initiate or terminate tunnel forwarding), the distribution master is configured with a respective tunnel. In some embodiments, the distribution master maintains a list of VLANs configured in the distributed tunnel endpoint. This allows the distribution master to map a respective VLAN to one of the service tunnels.

This mapping can be based on one or more of: the number of tunnels, the number of VLANs, and the traffic volume of a respective tunnel. The distribution master then includes this mapping in a notification message and sends the notification message to other switches in the distributed tunnel endpoint. Upon receiving the mapping, a respective switch can forward a packet belonging to a VLAN via the tunnel mapped to the VLAN. However, this can lead to traffic redundancy. To avoid redundant traffic, a switch forwards a packet belonging to a VLAN if the switch is a replicator for the tunnel mapped to the VLAN.

For example, one of the switches in the distributed tunnel endpoint is elected as a replicator of BUM traffic for a specific tunnel. The elected replicator becomes responsible for forwarding BUM traffic belonging to VLANs designated for that tunnel. Furthermore, the replicator is configured with multicast forwarding information for these VLANs. For example, forwarding entries for the multicast group identifiers of these VLANs are configured in the forwarding table of the replicator (e.g., in a content addressable memory (CAM)). In this way, the VLANs are distributed among the tunnels and one of the switches in the distributed tunnel endpoint is designated as the replicator for BUM traffic for the VLANs designated for a specific tunnel. Forwarding of BUM traffic of different VLANs thus becomes load balanced among different tunnels and different switches in the distributed tunnel endpoint.

In some embodiments, the switch can be a member switch of a network of interconnected switches (e.g., a fabric switch). In a fabric switch, any number of switches coupled in an arbitrary topology can be controlled as a single logical switch. The fabric switch can be an Ethernet fabric switch or a virtual cluster switch (VCS), which can operate as a single Ethernet switch. In some embodiments, a respective switch in the fabric switch is an Internet Protocol (IP) routing-capable switch (e.g., an IP router). In some further embodiments, a respective switch in the fabric switch is a Transparent Interconnection of Lots of Links (TRILL) routing bridge (RBridge).

It should be noted that a fabric switch is not the same as conventional switch stacking. In switch stacking, multiple switches are interconnected at a common location (often within the same rack), based on a particular topology, and manually configured in a particular way. These stacked switches typically share a common address, e.g., an IP address, so they can be addressed as a single switch externally. Furthermore, switch stacking requires a significant amount of manual configuration of the ports and inter-switch links. The need for manual configuration prohibits switch stacking from being a viable option in building a large-scale switching system. The topology restriction imposed by switch stacking also limits the number of switches that can be stacked. This is because it is very difficult, if not impossible, to design a stack topology that allows the overall switch bandwidth to scale adequately with the number of switch units.

In contrast, a fabric switch can include an arbitrary number of switches with individual addresses, can be based on an arbitrary physical topology, and does not require extensive manual configuration. The switches can reside in the same location, or be distributed over different locations. These features overcome the inherent limitations of switch stacking and make it possible to build a large "switch farm," which can be treated as a single, logical switch. Due to the automatic configuration capabilities of the fabric switch, an individual physical switch can dynamically join or leave the fabric switch without disrupting services to the rest of the network.

Furthermore, the automatic and dynamic configurability of the fabric switch allows a network operator to build its switching system in a distributed and "pay-as-you-grow" fashion without sacrificing scalability. The fabric switch's ability to respond to changing network conditions makes it an ideal solution in a virtual computing environment, where network loads often change with time.

It should also be noted that a fabric switch is distinct from a VLAN. A fabric switch can accommodate a plurality of VLANs. A VLAN is typically identified by a VLAN tag. In contrast, the fabric switch is identified by a fabric identifier (e.g., a cluster identifier), which is assigned to the fabric switch. Since a fabric switch can be represented as a logical chassis, the fabric identifier can also be referred to as a logical chassis identifier. A respective member switch of the fabric switch is associated with the fabric identifier. In some embodiments, a fabric switch identifier is pre-assigned to a member switch. As a result, when the switch joins a fabric switch, other member switches identifies the switch to be a member switch of the fabric switch.

In this disclosure, the term "fabric switch" refers to a number of interconnected physical switches which can form a single, scalable network of switches. The member switches of the fabric switch can operate as individual switches. The member switches of the fabric switch can also operate as a single logical switch in the provision and control plane, the data plane, or both. "Fabric switch" should not be interpreted as limiting embodiments of the present invention to a plurality of switches operating as a single, logical switch. In this disclosure, the terms "fabric switch" and "fabric" are used interchangeably.

Although the present disclosure is presented using examples based on an encapsulation protocol, embodiments of the present invention are not limited to networks defined using one particular encapsulation protocol associated with a particular Open System Interconnection Reference Model (OSI reference model) layer. For example, embodiments of the present invention can also be applied to a multi-protocol label switching (MPLS) network. In this disclosure, the term "encapsulation" is used in a generic sense, and can refer to encapsulation in any networking layer, sub-layer, or a combination of networking layers.

The term "end host" can refer to any device external to a network (e.g., does not perform forwarding in that network). Examples of an end host include, but are not limited to, a physical or virtual machine, a conventional layer-2 switch, a layer-3 router, or any other type of network device. Additionally, an end host can be coupled to other switches or hosts further away from a layer-2 or layer-3 network. An end host can also be an aggregation point for a number of network devices to enter the network. An end host hosting one or more virtual machines can be referred to as a host machine. In this disclosure, the terms "end host" and "host machine" are used interchangeably.

The term "VLAN" is used in a generic sense, and can refer to any virtualized network. Any virtualized network comprising a segment of physical networking devices, software network resources, and network functionality can be can be referred to as a "VLAN." "VLAN" should not be interpreted as limiting embodiments of the present invention to layer-2 networks. "VLAN" can be replaced by other terminologies referring to a virtualized network or network segment, such as "Virtual Private Network (VPN)," "Virtual Private LAN Service (VPLS)," or "Easy Virtual Network (EVN)."

The term "packet" refers to a group of bits that can be transported together across a network. "Packet" should not be interpreted as limiting embodiments of the present invention to layer-3 networks. "Packet" can be replaced by other terminologies referring to a group of bits, such as "frame," "cell," or "datagram."

The term "switch" is used in a generic sense, and can refer to any standalone or fabric switch operating in any network layer. "Switch" can be a physical device or software running on a computing device. "Switch" should not be interpreted as limiting embodiments of the present invention to layer-2 networks. Any device that can forward traffic to an external device or another switch can be referred to as a "switch." Examples of a "switch" include, but are not limited to, a layer-2 switch, a layer-3 router, a TRILL RBridge, or a fabric switch comprising a plurality of similar or heterogeneous smaller physical switches.

The term "edge port" refers to a port on a network which exchanges data frames with a device outside of the network (i.e., an edge port is not used for exchanging data frames with another member switch of a network). The term "inter-switch port" refers to a port which sends/receives data frames among member switches of the network. A link between inter-switch ports is referred to as an "inter-switch link." The terms "interface" and "port" are used interchangeably.

The term "switch identifier" refers to a group of bits that can be used to identify a switch. Examples of a switch identifier include, but are not limited to, a media access control (MAC) address, an Internet Protocol (IP) address, an RBridge identifier, or a combination thereof. In this disclosure, "switch identifier" is used as a generic term, is not limited to any bit format, and can refer to any format that can identify a switch.

The term "tunnel" refers to a data communication where one or more networking protocols are encapsulated using another networking protocol. Although the present disclosure is presented using examples based on a layer-3 encapsulation of a layer-2 protocol, "tunnel" should not be interpreted as limiting embodiments of the present invention to layer-2 and layer-3 protocols. A "tunnel" can be established for and using any networking layer, sub-layer, or a combination of networking layers.

### Network Architecture

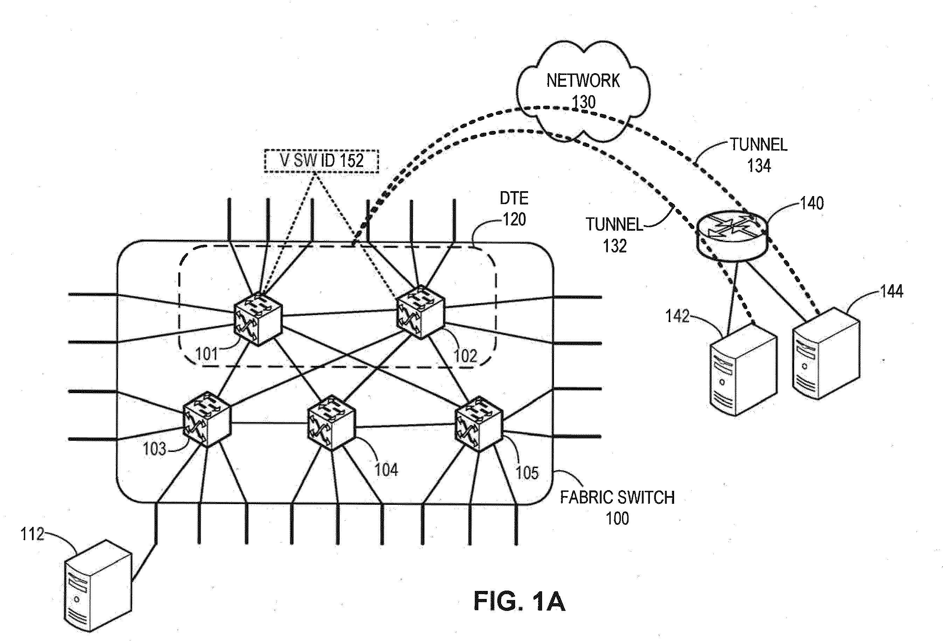

FIG. 1A illustrates an exemplary distributed tunnel endpoint with dynamic multi-destination traffic management support, in accordance with an embodiment of the present invention. As illustrated in FIG. 1A, a network 100 includes switches 101, 102, 103, 104, and 105. An end device 112 is coupled to switch 103. In some embodiments, end device 112 is a host machine, hosting one or more virtual machines. End device 112 can include a hypervisor, which runs one or more virtual machines. Switch 103 can be equipped with a network interface card (NIC) with one or more ports. End device 112 is coupled to switch 103 via the ports of the NIC. In some embodiments, network 100 is TRILL network and a respective switch in network 100 is a TRILL RBridge. Inter-switch packet forwarding in network 100 can be based on encapsulating an Ethernet packet received from an end device with a TRILL header.

In some further embodiments, network 100 is an IP network and a respective switch of network 100, such as switch 103, is an IP-capable switch, which calculates and maintains a local IP routing table (e.g., a routing information base or RIB), and is capable of forwarding packets based on its IP addresses. Under such a scenario, communication among the switches in network 100 is based on IP or IP-based tunneling. For example, upon receiving an Ethernet frame from end device 112, switch 103 encapsulates the received Ethernet frame in an IP header (and/or a tunneling header) and forwards the IP packet. Examples of a tunneling protocol include, but are not limited to, virtual extensible LAN (VXLAN), generic routing encapsulation (GRE), layer-2 tunneling protocol (L2TP), and multi-protocol label switching (MPLS).

In some embodiments, network 100 is a fabric switch (under such a scenario, network 100 can also be referred to as fabric switch 100). Fabric switch 100 is identified by and assigned with a fabric switch identifier (e.g., a fabric label). A respective member switch of fabric switch 100 is associated with that fabric switch identifier. This allows the member switch to indicate that it is a member of fabric switch 100. In some embodiments, whenever a new member switch joins fabric switch 100, the fabric switch identifier is associated with that new member switch. Furthermore, a respective member switch of fabric switch 100 is assigned a switch identifier (e.g., an RBridge identifier, a Fibre Channel (FC) domain ID (identifier), or an IP address). This switch identifier identifies the member switch in fabric switch 100. The fabric label can be included in a header of packet for any inter-fabric and/or intra-fabric communication.

Switches in network 100 use edge ports to communicate with end devices (e.g., non-member switches) and inter-switch ports to communicate with other member switches. For example, switch 103 is coupled to end device 112 via an edge port and to switches 101, 102, and 104 via inter-switch ports and one or more links. Data communication via an edge port can be based on Ethernet and via an inter-switch port can be based on an encapsulation protocol (e.g., VXLAN or TRILL). It should be noted that control message exchange via inter-switch ports can be based on a different protocol (e.g., the IP or FC protocol).

In this example, switches 101 and 102, in conjunction with each other, operate as a distributed tunnel endpoint 120 (e.g., a VXLAN tunnel endpoint (VTEP)). Here, switches 101 and 102 operate as a single, logical tunnel endpoint sharing a common tunnel address, which is virtual switch identifier 152 (e.g., a virtual IP address). In some embodiments, an administrator configures distributed tunnel endpoint 120 for switches 101 and 102. During operation, distributed tunnel endpoint 120 establishes service tunnels 132 and 134 with service nodes 142 and 144, respectively. Here, service node 142 or 144 can be a physical or a virtual node that provides a service to a switch or a network. Examples of a service node include, but are not limited to, a server, a tunnel gateway (e.g., a VXLAN gateway), a virtual machine, a storage device, and a network appliance.

With existing technologies, since distributed tunnel endpoint 120 operate as a tunnel endpoint for a plurality of tunnels, one of tunnels 132 and 134 is elected as a designated forwarder of BUM traffic. Suppose that tunnel 132 is elected as the designated forwarder to carry BUM traffic belonging to a respective VLAN associated with distributed tunnel endpoint 120. As a result, tunnel 132 can become bottlenecked while tunnel 134 can remain underutilized. Furthermore, if tunnel 132 or service node 142 fails, tunnel 134 (and service node 144) is selected as the new designated forwarder of BUM traffic. This leads to reprogramming of a respective VLAN (e.g., reprogramming of multicast group identifiers associated with that VLAN) for newly selected tunnel 134. Such a migration can be intensive for a large number of VLANs and cause delay in traffic switchover from service node 142 to service node 144.

To solve this problem, switches 101 and 102, which operate in conjunction with each other as distributed tunnel endpoint 120, select one of switches 101 and 102 as a distribution master based on selection criteria. In some embodiments, the selection criteria includes: the switch with the lowest (or highest) switch identifier value and with at least one active service tunnel. If a new switch joins network 100 with superior selection criteria, barring a failure, the already selected switch remains the distribution master. For example, if the switch identifier is an IP address or a TRILL RBridge identifier, the value of the bits representing the switch identifier can be used to determine the distribution master. Suppose that switch 101 is selected as the distribution master. Since both switches 101 and 102 can operate as the tunnel endpoint for tunnels 132 and 134, both switches 101 and 102 is configured with tunnels 132 and 134. In some embodiments, switches 101 and 102 maintain a list of VLANs configured in distributed tunnel endpoint 120.

Based on the list, switch 101 can map a respective VLAN to one of service tunnels 132 and 134. This mapping can be based on one or more of: the number of tunnels (i.e., two in FIG. 1A), the number of VLANs, and the traffic volume on tunnels 132 and 134. Switch 101 then includes this mapping in a notification message and sends the notification message to switch 102, which is the other switch in distributed tunnel endpoint 120. In some embodiments, switch 101 sends the notification message to a respective switch in network 100. This notification message can be a distribution message in network 100 (e.g., a multicast message sent via a multicast tree).

Upon receiving the mapping, a respective switch forwards a packet belonging to a VLAN via the tunnel mapped to the VLAN. Suppose that switch 102 receives a packet requiring service from a service node (e.g., requiring access to a tunnel gateway). If the packet belongs to a VLAN mapped to tunnel 134, switch 102 determines from the mapping that the packet should be forwarded via tunnel 134. Switch 102 then encapsulates the packet with a tunnel encapsulation header (e.g., a VXLAN header), and sets virtual switch identifier 152 and the identifier of service node 144 as source and destination addresses of the encapsulation header, respectively. Switch 102 identifies a local port associated with tunnel 134 as the egress port for the encapsulated packet (e.g., from a local forwarding table) and transmits the encapsulated packet via the port.

Furthermore, to avoid redundant traffic, one of switches 101 and 102 in the distributed tunnel endpoint is elected as a replicator for BUM traffic for a specific tunnel. For example, switches 101 and 102 can be elected as the replicator of BUM traffic for tunnels 132 and 134, respectively. Switches 101 and 102 then become responsible for forwarding BUM traffic belonging to VLANs designated for tunnels 132 and 134, respectively. As a result, switch 101 is configured with multicast forwarding information for the VLANs mapped to tunnel 132. For example, forwarding entries for the multicast group identifiers of these VLANs are configured in the forwarding table of switch 101 (e.g., in a CAM of switch 101).

Similarly, switch 102 is configured with multicast forwarding information for the VLANs mapped to tunnel 134. In this way, the VLANs are distributed among tunnels 132 and 134, and switches 101 and 102 are designated as the replicator for the VLANs designated for tunnels 132 and 134, respectively. Forwarding BUM traffic of different VLANs, therefore, becomes load balanced among tunnels 132 and 134, and among switches 101 and 102. In some embodiments, an administrator provides a replicator for a tunnel (e.g., during the tunnel configuration). In some further embodiments, the distribution master, which is switch 101, can determine a replicator for a tunnel based on one or more of: the number of tunnels, the number of VLANs, and the traffic volume of a respective tunnel.

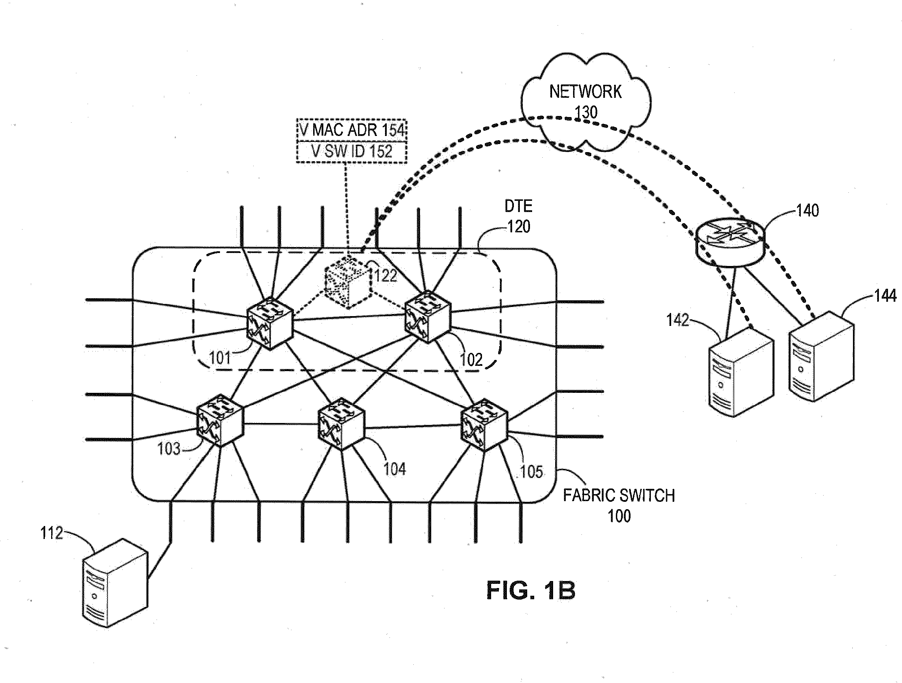

FIG. 1B illustrates an exemplary virtual switch representing a distributed tunnel endpoint with dynamic multi-destination traffic management support, in accordance with an embodiment of the present invention. In this example, distributed tunnel endpoint 120 is represented as a virtual switch 122. Switches 101 and 102 can notify switches 103, 104, and 105 that switch 122 is reachable via switches 101 and 102. As a result, switches 103, 104, and 105 consider switch 122 as a regular member switch of network 100 reachable via switches 101 and 102. Virtual switch identifier 152 can be allocated to virtual switch 122. Switches 101 and 102 consider virtual switch identifier 152 as a local address and decapsulate a header with virtual switch identifier 152 as the destination address.

In some embodiments, virtual switch 122 is further associated with a virtual MAC address 154. In response to receiving an Address Resolution Protocol (ARP) query for virtual switch identifier 152, switch 101 (or switch 102) responds with an ARP response comprising virtual MAC address 154. In some embodiments, the distribution master can be designated for responding to ARP queries for virtual switch identifier 152.

### Mapping Tables

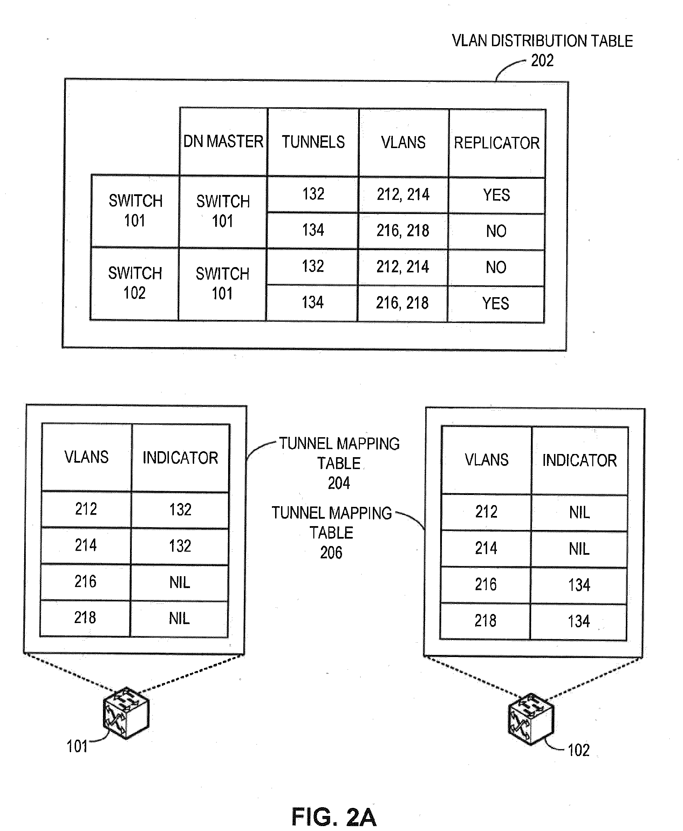

FIG. 2A illustrates exemplary tables for facilitating dynamic multi-destination traffic management in a distributed tunnel endpoint, in accordance with an embodiment of the present invention. In this example, a VLAN distribution table 202 maps a respective VLAN associated with distributed tunnel endpoint 120 to a corresponding tunnel. If switch 101 is elected as the distribution master, VLAN distribution table 202 indicates that switch 101 is the distribution master. Suppose that VLANs 212, 214, 216, and 218 are configured in distributed tunnel endpoint 120 (e.g., in switches 101 and 102). In some embodiments, VLANs 212, 214, 216, and 218 are the VLANs configured in network 100, and a respective switch in network 100 maintains a list of VLANs configured in network 100. In VLAN distribution table 202, a VLAN can be identified by a VLAN identifier (e.g., a VLAN tag), and a tunnel can be identified by a tunnel identifier (e.g., the IP addresses of the tunnel endpoints, a VXLAN Network Identifier (VNI), a GRE key, or a combination thereof).

During operation, switch 101, operating as the distribution master, maps a respective VLAN to a corresponding tunnel. For example, VLANs 212 and 214 are mapped to tunnel 132, and VLANs 216 and 218 are mapped to tunnel 134. Switch 101 includes this mapping in VLAN distribution table 202. Switch 101 further maps the replicator of BUM traffic for a respective tunnel in VLAN distribution table 202. If switches 101 and 102 are selected as replicators for tunnels 132 and 134, respectively, switch 101 becomes responsible for forwarding BUM traffic of VLANs 212 and 214, and switch 102 becomes responsible for forwarding BUM traffic of VLANs 216 and 218. Switch 101 then includes VLAN distribution table 202 in a notification message and forwards the notification message to switch 102. In some embodiments, switch 101 forwards the notification message to a respective other switch in network 100.

Switch 102 receives the notification message and stores VLAN distribution table 202 in a local storage device. This allows switch 102 to select service tunnels for BUM traffic based on VLAN distribution table 202. Suppose that switch 102 receives a packet belonging to BUM traffic of VLAN 214. Switch 102 determines that switch 101 is the replicator for tunnel 132 mapped to VLAN 214 from VLAN distribution table 202. Switch 102 then forwards the packet to switch 101. Furthermore, based on VLAN distribution table 202, a respective switch maintains a tunnel mapping table. The tunnel mapping table maps a respective VLAN to an indicator, which indicates whether the switch is elected as the replicator for the tunnel mapped to the VLAN. In some embodiments, the tunnel mapping table is in the forwarding table of a switch and can also include an egress port corresponding to the tunnel (not shown in FIG. 2A).

In some embodiments, the indicator is represented by a service tunnel identifier or a "NIL" entry. For example, tunnel mapping table 204 of switch 101 indicates that VLANs 212 and 214 are mapped to tunnel 132. Since VLANs 216 and 218 are mapped to tunnel 134, and switch 101 is not the replicator for tunnel 134, tunnel mapping table 204 further indicates that VLANs 216 and 218 do not have a forwarding tunnel for BUM traffic from switch 101 (e.g., represented by a "NIL" entry). Similarly, tunnel mapping table 206 of switch 102 indicates that VLANs 216 and 218 are mapped to tunnel 134, and VLANs 212 and 214 do not have a forwarding tunnel for BUM traffic from switch 102. In tables 204 and 206, a VLAN can be represented by a multicast group identifier for that VLAN. Furthermore, tables 204 and 206 can be part of forwarding tables of switches 101 and 102, respectively.

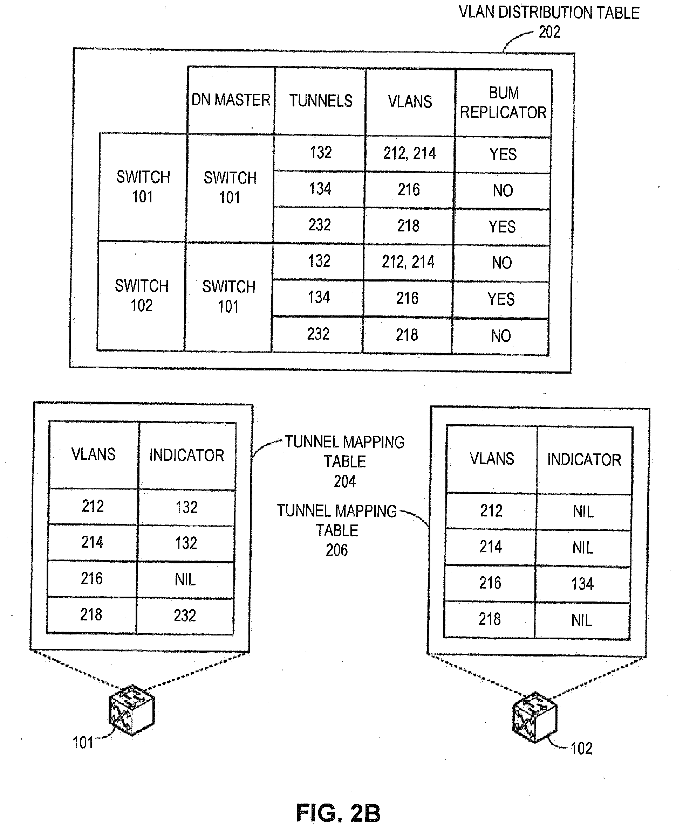

FIG. 2B illustrates an exemplary addition of a tunnel to the tables facilitating dynamic multi-destination traffic management in a distributed tunnel endpoint, in accordance with an embodiment of the present invention. During operation, a new tunnel 232 is configured between distributed tunnel endpoint 120 and a service node. Suppose that switch 101 is elected as the replicator for tunnel 232. Switch 101, as the distribution master, recalculates the mappings between the VLANs and the tunnels, and updates VLAN distribution table 202 accordingly. If the recalculation maps VLAN 218 to tunnel 232, only VLAN 216 remains mapped to tunnel 134. Switch 101 shares the updated VLAN distribution table 202 with switch 102.

Switches 101 and 102 then updates tunnel mapping tables 204 and 206, respectively, based on VLAN distribution table 202. Tunnel mapping table 204 of switch 101 indicates that tunnel 132 is the forwarding tunnel for VLANs 212 and 214. Since VLAN 218 is now mapped to tunnel 232, and switch 101 is the replicator for tunnel 232, tunnel mapping table 204 further indicates that tunnel 232 is the forwarding tunnel for VLAN 218. Tunnel mapping table 204 also indicates that VLAN 216 does not have a forwarding tunnel for BUM traffic from switch 101. Similarly, tunnel mapping table 206 of switch 102 indicates that tunnel 134 is the forwarding tunnel for VLAN 216, and VLANs 212, 214, and 218 do not have a forwarding tunnel for BUM traffic from switch 102.

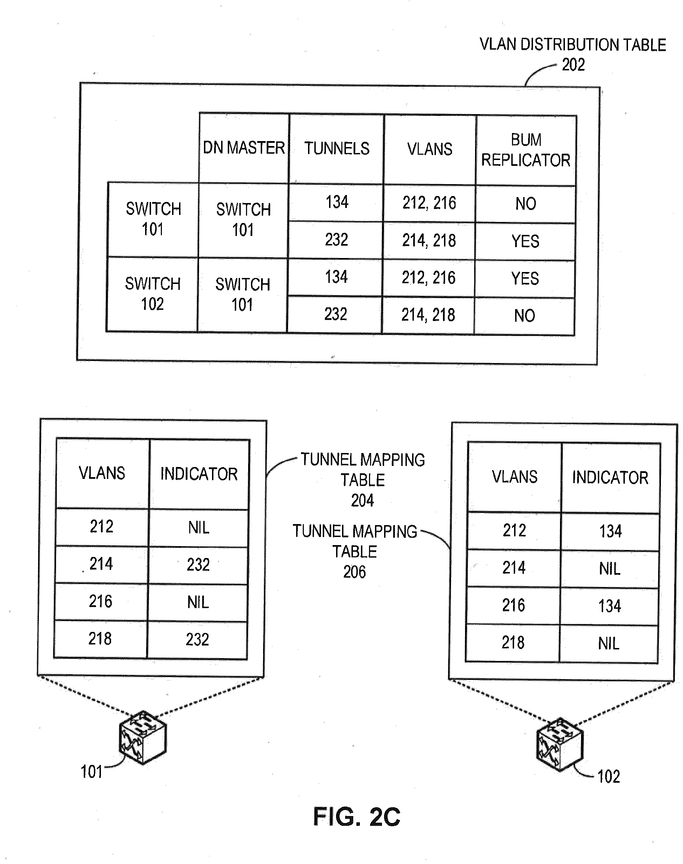

FIG. 2C illustrates an exemplary deletion of a tunnel from the tables facilitating dynamic multi-destination traffic management in a distributed tunnel endpoint, in accordance with an embodiment of the present invention. During operation, tunnel 132 is deleted from distributed tunnel endpoint 120 and service node 142. As a result, tunnels 134 and 232 remain configured between distributed tunnel endpoint 120 and corresponding service nodes. Switch 101, as the distribution master, recalculates the mappings between the VLANs and the remaining tunnels, and updates VLAN distribution table 202 accordingly. In this example, the recalculation maps VLANs 212 and 216 to tunnel 134, and VLANs 214 and 218 to tunnel 232. Switch 101 shares the updated VLAN distribution table 202 with switch 102.

Here, switches 101 and 102 remain replicators for tunnels 232 and 134, respectively. Correspondingly, switches 101 and 102 update tunnel mapping tables 204 and 206, respectively, based on VLAN distribution table 202. Tunnel mapping table 204 of switch 101 indicates that tunnel 232 is the forwarding tunnel for VLANs 214 and 218. Tunnel mapping table 204 also indicates that VLANs 212 and 216 do not have a forwarding tunnel for BUM traffic from switch 101. Similarly, tunnel mapping table 206 of switch 102 indicates that tunnel 134 is the forwarding tunnel for VLANs 212 and 216, and VLANs 214 and 218 do not have a forwarding tunnel for BUM traffic from switch 102.

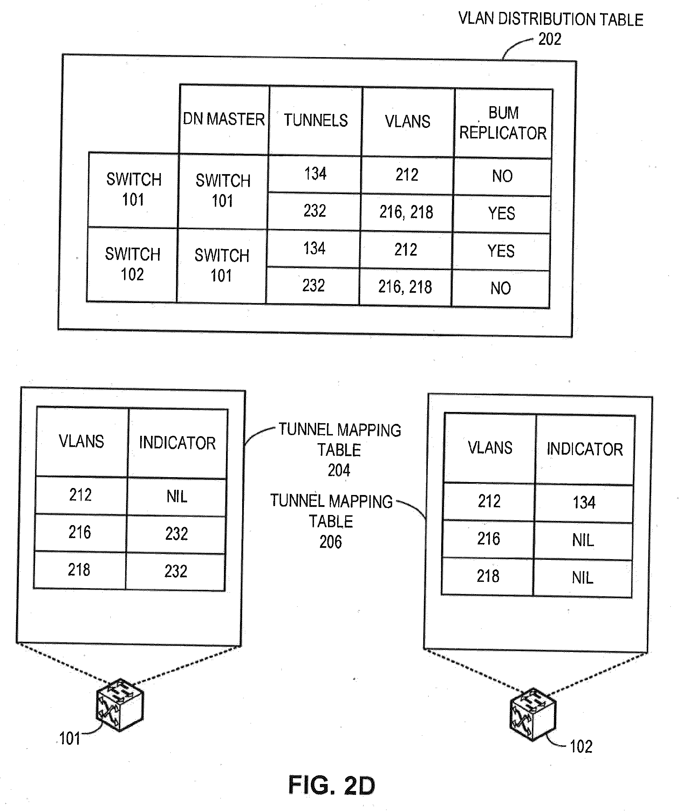

FIG. 2D illustrates an exemplary deletion of a VLAN from the tables facilitating dynamic multi-destination traffic management in a distributed tunnel endpoint, in accordance with an embodiment of the present invention. During operation, VLAN 214 is deleted from distributed tunnel endpoint 120 (and network 100). As a result, VLANs 212, 216, and 218 remain configured in distributed tunnel endpoint 120. Switch 101, as the distribution master, recalculates the mappings between the remaining VLANs and the tunnels, and updates VLAN distribution table 202 accordingly. In this example, switch 101 reallocates VLAN 216 to tunnel 232. Hence, the recalculation maps VLANs 216 and 218 to tunnel 232, and VLAN 212 to tunnel 134. Switch 101 shares the updated VLAN distribution table 202 with switch 102.

Here, switches 101 and 102 remain replicators for tunnels 232 and 134, respectively. Correspondingly, switches 101 and 102 update tunnel mapping tables 204 and 206, respectively, based on VLAN distribution table 202. Tunnel mapping table 204 of switch 101 indicates that tunnel 232 is the forwarding tunnel for VLANs 216 and 218. Tunnel mapping table 204 also indicates that VLAN 212 does not have a forwarding tunnel for BUM traffic from switch 101. Similarly, tunnel mapping table 206 of switch 102 indicates that tunnel 134 is the forwarding tunnel for VLAN 212, and VLANs 216 and 218 do not have a forwarding tunnel for BUM traffic from switch 102.

### Tunnel Management Operations

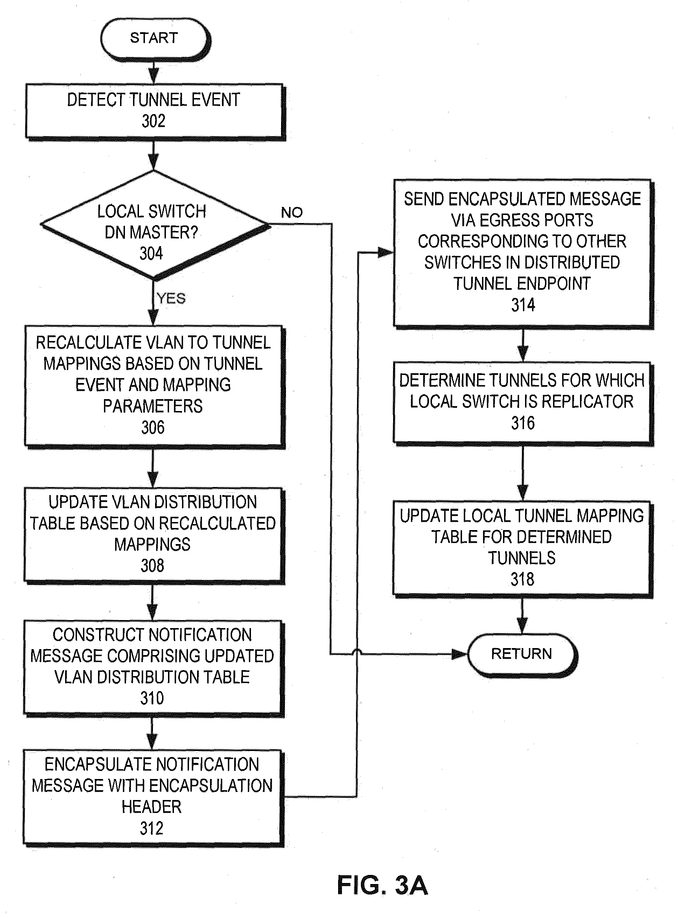

FIG. 3A presents a flowchart illustrating an exemplary process of a switch dynamically determining VLAN and tunnel mappings for multi-destination traffic, in accordance with an embodiment of the present invention. During operation, the switch detects a tunnel event (operation 302). A tunnel event can be any event that causes a distribution master to recalculate the mappings. Examples of a tunnel event include, but are not limited to, addition or deletion of a tunnel, and addition or deletion of a VLAN. The switch then checks whether the local switch is the distribution master (operation 304).

If the local switch the distribution master, the switch recalculates the VLAN to tunnel mappings based on the tunnel event and one or more mapping parameters (operation 306). For example, if the tunnel event is a deletion of a tunnel, that tunnel is deleted from the mapping and the VLANs are reallocated to the remaining tunnels. Examples of mapping parameters include, but are not limited to, the number of tunnels, the number of VLANs, and the traffic volume of a respective tunnel. If the distribution master is selected for the first time, the distribution master simply calculates the mapping.

The switch then updates the VLAN distribution table based on the recalculated mappings (operation 308) and constructs a notification message comprising the updated VLAN distribution table (operation 310). The switch encapsulates the notification message with an encapsulation header (operation 312) and sends the encapsulated message via one or more egress ports corresponding to the other switches in the distributed tunnel endpoint (operation 314). The switch then determines the tunnels for which the switch is the replicator of BUM traffic (operation 316) and update the local tunnel mapping table based on the determined tunnels (operation 318).

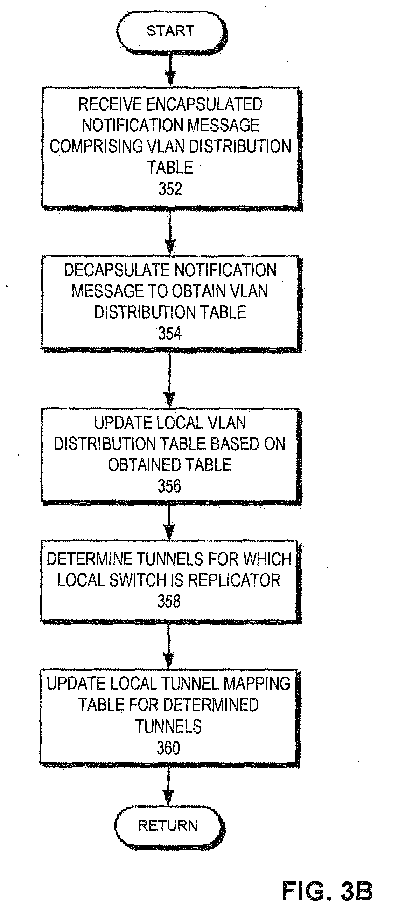

FIG. 3B presents a flowchart illustrating an exemplary process of a switch updating VLAN and tunnel mappings for multi-destination traffic, in accordance with an embodiment of the present invention. During operation, the switch receives an encapsulated notification message comprising the VLAN distribution table (operation 352) and decapsulates the notification message to obtain the VLAN distribution table (operation 354). In some embodiments, the encapsulation and decapsulation can be based on TRILL or IP. The switch then updates the local VLAN distribution table based on the obtained table (operation 356). The switch determines the tunnels for which the switch is the replicator of BUM traffic (operation 358) and update the local tunnel mapping table based on the determined tunnels (operation 360).

### Packet Forwarding

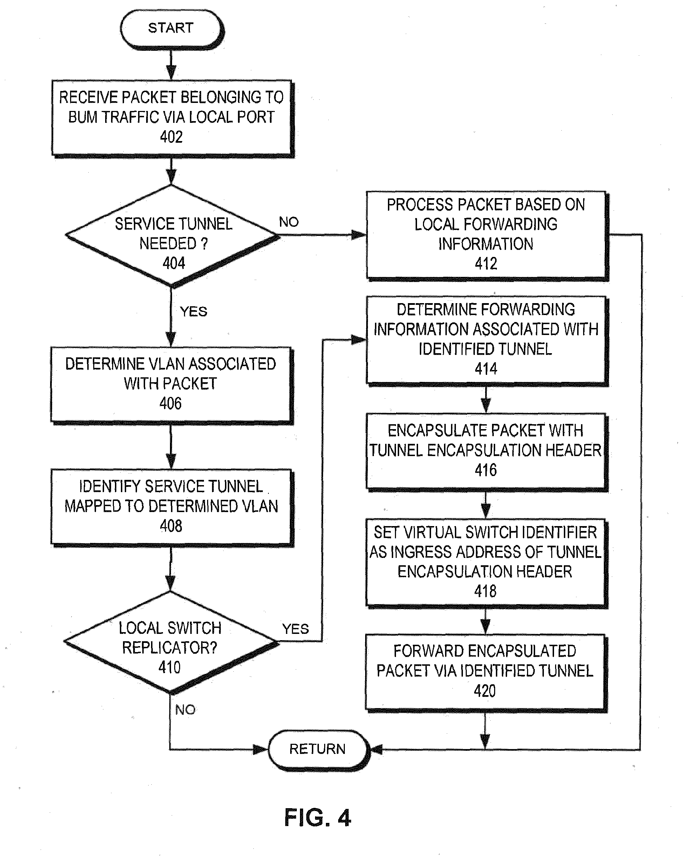

FIG. 4 presents a flowchart illustrating an exemplary process of a switch in a distributed tunnel endpoint forwarding multi-destination packet, in accordance with an embodiment of the present invention. During operation, the switch receives a packet belonging to BUM traffic via a local port (operation 402). The switch checks whether the packet requires a service tunnel (operation 404) (e.g., requires access to a tunnel gateway). If the packet does not require a service tunnel, the switch processes the packet based on the local forwarding information (operation 412). If the packet requires a service tunnel, the switch determines a VLAN associated with the packet (operation 406) and identifies a service tunnel mapped to the determined VLAN (operation 408) (e.g., from the VLAN distribution table).

The switch then checks whether the local switch is the replicator of BUM traffic for the tunnel (operation 410) (e.g., from the tunnel mapping table). If the local switch is the replicator, the switch determines forwarding information associated with the identified tunnel (operation 414) and encapsulates the packet with a tunnel encapsulation header (operation 416). This tunnel encapsulation header can be based on the identified tunnel. The switch sets the virtual switch identifier of the distributed tunnel gateway as the ingress address of the tunnel encapsulation header (operation 418) and forwards the encapsulated packet via the identified tunnel (operation 420). Since the switch sets the identifier of the service node associated with the tunnel as the egress address of the tunnel encapsulation header, forwarding the encapsulated packet includes determining an egress port corresponding to the identifier of the service node and transmitting via the port.

### Failure Recovery

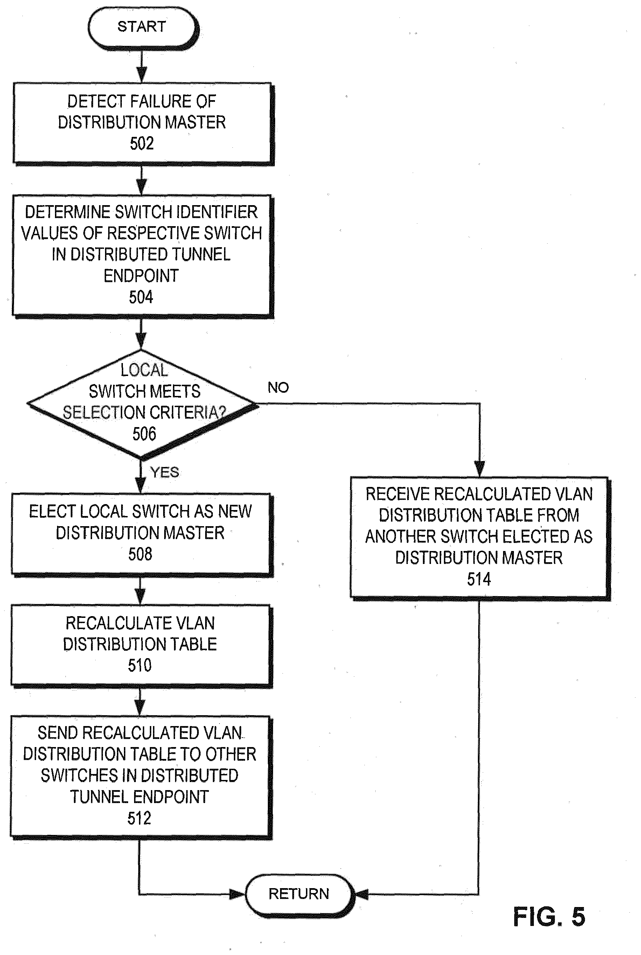

FIG. 5 presents a flowchart illustrating an exemplary failure recovery process of a switch in a distributed tunnel endpoint, in accordance with an embodiment of the present invention. During operation, the switch detects the failure of a distribution master (operation 502) and determines the switch identifier values of a respective switch in the distributed tunnel endpoint (operation 504). The switch then checks whether the local switch meets the selection criteria (operation 506). In some embodiments, the selection criteria includes: the switch with the lowest (or highest) switch identifier value and with at least one active service tunnel.

If the local switch meets the selection criteria, the switch elects the local switch as the new distribution master (operation 508). The switch then recalculates the VLAN distribution table (operation 510) and sends the recalculated VLAN distribution table to other switches in the distributed tunnel endpoint (operation 512). In some embodiments, the switch sends the recalculated VLAN distribution table to a respective other switches in the network. On the other hand, if the local switch does not meet the selection criteria, another switch is elected as the distribution master. The switch then receives recalculated VLAN distribution table from the other switch elected as the new distribution master (operation 514).

### Exemplary Switch

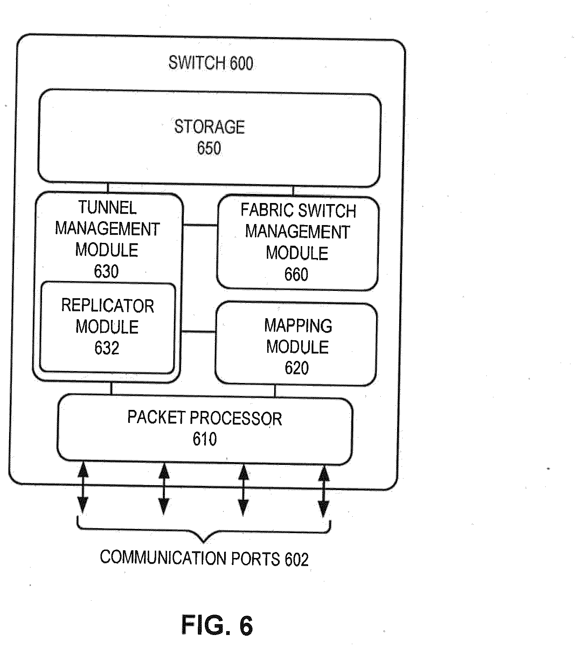

FIG. 6 illustrates an exemplary switch of a distributed tunnel endpoint with dynamic multi-destination traffic management support, in accordance with an embodiment of the present invention. In this example, a switch 600 includes a number of communication ports 602, a packet processor 610, a tunnel management module 630, a replicator module 632, a mapping module 620, and a storage device 650. Switch 600 can also include switch modules, such as processing hardware of switch 600 (e.g., ASIC chips). Packet processor 610 extracts and processes header information from the received packets. Packet processor 610 can identify a switch identifier associated with the switch in header of a packet.

In some embodiments, switch 600 maintains a membership in a fabric switch, as described in conjunction with FIG. 1, wherein switch 600 also includes a fabric switch module 640. Fabric switch module 640 maintains a configuration database in storage device 650 that maintains the configuration state of every switch within the fabric switch. Fabric switch module 640 maintains the state of the fabric switch, which is used to join other switches. In some embodiments, switch 600 can be configured to operate in conjunction with a remote switch as an Ethernet switch.

Communication ports 602 can include inter-switch communication channels for communication within the fabric switch. This inter-switch communication channel can be implemented via a regular communication port and based on any open or proprietary format. Communication ports 602 can also include one or more extension communication ports for communication between neighbor fabric switches. Communication ports 602 can include one or more TRILL ports capable of receiving frames encapsulated in a TRILL header. Communication ports 602 can also include one or more IP ports capable of receiving IP packets. An IP port is capable of receiving an IP packet and can be configured with an IP address. Packet processor 610 can process TRILL-encapsulated frames and/or IP packets (e.g., tunnel encapsulated packets).

During operation, mapping module 620 maintains a first and a second mappings. The first mapping, which can be in a local VLAN distribution table in storage device 650, is between a service tunnel identifier and a VLAN identifier. The second mapping is between the VLAN identifier and an indicator, as described in conjunction with FIG. 2A. The second mapping can be in the forwarding table of switch 600 (e.g., in a CAM) and can include a multicast group identifier of the VLAN. As indicated by a local tunnel mapping table, if switch 600 is the replicator of the tunnel associated with the service tunnel identifier, packet processor 610 determines an egress port (e.g., from ports 602) corresponding to the first service tunnel for a packet of multi-destination traffic belonging to the VLAN. If switch 600 is not the replicator of the tunnel, packet processor 610 is precluded from determining the egress port for the packet.

In some embodiments, tunnel management module 630 operates switch 600 as a distributed tunnel endpoint in conjunction with, another switch for a plurality of service tunnels. Switch 600 and the other switch are associated with an IP address indicating the distributed tunnel endpoint. Packet processor 610 encapsulates the packet with an encapsulation header and sets the IP address as a source address of the encapsulation header. Tunnel management module 630 can elect a distribution master from switch 600 and the other switch.

Note that the above-mentioned modules can be implemented in hardware as well as in software. In one embodiment, these modules can be embodied in computer-executable instructions stored in a memory which is coupled to one or more processors in switch 600. When executed, these instructions cause the processor(s) to perform the aforementioned functions.

In summary, embodiments of the present invention provide a switch and a method which facilitates efficient management of multi-destination traffic in a distributed tunnel endpoint. In one embodiment, the switch includes a storage device, a mapping module, and a packet processor. During operation, the mapping module maintains a first and a second mappings. The first mapping, which can be in the storage device, is between a first service tunnel identifier and a first VLAN identifier. The second mapping is between the first VLAN identifier and an indicator, which indicates whether the switch is elected as a designated forwarder of multi-destination traffic for the first service tunnel identifier. If the indicator indicates that the switch is the designated forwarder of multi-destination traffic for the first service tunnel identifier, the packet processor determines an egress port, which corresponds to the first service tunnel, for a packet of multi-destination traffic belonging to the first VLAN.

The methods and processes described herein can be embodied as code and/or data, which can be stored in a computer-readable non-transitory storage medium. When a computer system reads and executes the code and/or data stored on the computer-readable non-transitory storage medium, the computer system performs the methods and processes embodied as data structures and code and stored within the medium.

The methods and processes described herein can be executed by and/or included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

## Claims

1. A fabric switch (100), comprising:
a plurality of switches (101, 102, 103, 104, 105, 600);
a storage device (650);
a mapping module (620) configured to:
maintain, in the storage device, a first mapping between a first service tunnel identifier associated with a first service tunnel (132, 134) and a first virtual local area network, VLAN, identifier associated with a first VLAN (212, 214, 216, 218) from a number of VLANs (212, 214, 216, 218);
maintain a second mapping between the first VLAN identifier and an indicator, wherein the indicator indicates which of the plurality of switches (101, 102, 103, 104, 105, 600) is elected as a designated forwarder of multi-destination traffic for the first service tunnel identifier;
maintain a VLAN distribution table (202) that maps a respective VLAN (212, 214, 216, 218) associated with a distributed tunnel endpoint (120) to a corresponding service tunnel (132, 134), wherein the VLAN distribution table (202) indicates that the elected one of the plurality of switches (101, 102, 103, 104, 105, 600) is a distribution master (101); and
a packet processor (610) configured to select one of the plurality of switches (101, 102, 103, 104, 105, 600) as a replicator for multicast traffic for the first service tunnel (132, 134) in response to the indicator indicating the one of the plurality of switches (101, 102, 103, 104, 105, 600) to be a designated forwarder of multi-destination traffic for the first service tunnel identifier; wherein
the distribution master (101) is configured to recalculate the first mappings and to update the VLAN distribution table (202), when one of the plurality of switches (101, 102, 103, 104, 105, 600) is selected as a replicator for multicast traffic for the first service tunnel (132, 134);
the selected replicator is configured for being responsible for forwarding BUM traffic belonging to VLANs (212, 214, 216, 218) designated for the first service tunnel (132, 134); and
the selected replicator is configured with multicast forwarding information for the VLANs (212, 214, 216, 218) designated for the first service tunnel (132, 134).

2. The fabric switch of claim 1, wherein forwarding entries for multicast group identifiers of the VLANs (212, 214, 216, 218) designated for the first service tunnel (132, 134) are configured in a forwarding table of the replicator.

3. The fabric switch of one of the preceding claims, wherein the distribution master (101) is further configured to determine the replicator for the first service tunnel (132, 134) based on one or more of: a number of tunnels (132, 134), the number of VLANs (212, 214, 216, 218), and a traffic volume of a respective tunnel (132, 134).

4. The fabric switch of one of the preceding claims, wherein a tunnel mapping table (204, 206) maps a respective VLAN (212, 214, 216, 218) to the indicator that indicates whether one of the plurality of switches (101, 102, 103, 104, 105, 600) is elected as the replicator for the tunnel (132, 134) mapped to the VLAN (212, 214, 216, 218).

5. The fabric switch of one of the preceding claims, wherein at least one of the plurality of switches (101, 102, 103, 104, 105, 600) is configured to map the replicator for a respective tunnel (132, 134) in a VLAN distribution table (202).

6. The fabric switch of claim 5, wherein the at least one of the plurality of switches (101, 102, 103, 104, 105, 600) is further configured to include the VLAN distribution table (202) in a notification message and to forward the notification message to a second one of the plurality of switches (101, 102, 103, 104, 105, 600).

7. A method, comprising the steps of:
maintaining a first mapping between a first service tunnel identifier associated with a first service tunnel (132, 134) and a first virtual local area network, VLAN, identifier associated with a first VLAN (212, 214, 216, 218) from a number of VLANs (212, 214, 216, 218);
maintaining a second mapping between the first VLAN identifier and an indicator, wherein the indicator indicates whether one of a plurality of switches (101, 102, 103, 104, 105, 600) is elected as a designated forwarder of multi-destination traffic for the first service tunnel identifier;
maintaining a VLAN distribution table (202) that maps a respective VLAN (212, 214, 216, 218) associated with a distributed tunnel endpoint (120) to a corresponding service tunnel (132, 134), wherein the VLAN distribution table (202) indicates that the elected one of the plurality of switches (101, 102, 103, 104, 105, 600) is a distribution master;
selecting one of the plurality of switches (101, 102, 103, 104, 105, 600) as a replicator for multicast traffic for the first service tunnel (132, 134) in response to the indicator indicating the one of the plurality of switches (101, 102, 103, 104, 105, 600) to be a designated forwarder of multi-destination traffic for the first service tunnel identifier; and
recalculating the first mappings and to update the VLAN distribution table (202), when one of the plurality of switches (101, 102, 103, 104, 105, 600) is selected as a replicator for multicast traffic for the first service tunnel (132, 134); wherein
the selected replicator is configured for being responsible for forwarding BUM traffic belonging to VLANs (212, 214, 216, 218) designated for the first service tunnel (132, 134); and
the selected replicator is configured with multicast forwarding information for the VLANs (212, 214, 216, 218) designated for the first service tunnel (132, 134).

8. A computer system; comprising:
a processor;
a storage device (650) coupled to the processor and storing instructions that when executed by the processor cause the processor to perform a method, the method comprising:
maintaining a first mapping between a first service tunnel identifier associated with a first service tunnel (132, 134) and a first virtual local area network, VLAN, identifier associated with a first VLAN (212, 214, 216, 218) from a number of VLANs (212, 214, 216, 218);
maintaining a second mapping between the first VLAN identifier and an indicator, wherein the indicator indicates whether one of a plurality of switches (101, 102, 103, 104, 105, 600) is elected as a designated forwarder of multi-destination traffic for the first service tunnel identifier;
maintaining a VLAN distribution table (202) that maps a respective VLAN (212, 214, 216, 218) associated with a distributed tunnel endpoint (120) to a corresponding service tunnel (132, 134), wherein the VLAN distribution table (202) indicates that the elected one of the plurality of switches (101, 102, 103, 104, 105, 600) is a distribution master;
selecting one of the plurality of switches (101, 102, 103, 104, 105, 600) as a replicator for multicast traffic for the first service tunnel (132, 134) in response to the indicator indicating the one of the plurality of switches (101, 102, 103, 104, 105, 600) to be a designated forwarder of multi-destination traffic for the first service tunnel identifier; and
recalculating the first mappings and to update the VLAN distribution table (202), when one of the plurality of switches (101, 102, 103, 104, 105, 600) is selected as a replicator for multicast traffic for the first service tunnel (132, 134); wherein
the selected replicator is configured for being responsible for forwarding BUM traffic belonging to VLANs (212, 214, 216, 218) designated for the first service tunnel (132, 134); and
the selected replicator is configured with multicast forwarding information for the VLANs (212, 214, 216, 218) designated for the first service tunnel (132, 134).

## Patentansprüche

1. Fabric-Switch (100), umfassend:
eine Vielzahl von Switches (101, 102, 103, 104, 105, 600) ;
eine Speichervorrichtung (650);
ein Zuordnungsmodul (620), das für folgende Vorgänge ausgelegt ist:
Aufrechterhalten, in der Speichervorrichtung, einer ersten Zuordnung zwischen einer ersten Diensttunnelkennung, die einem ersten Diensttunnel (132, 134) zugeordnet ist, und einer ersten "Virtual Local Area Network"-, VLAN-, Kennung, die einem ersten VLAN (212, 214, 216, 218) aus einer Anzahl von VLANs (212, 214, 216, 218) zugeordnet ist;
Aufrechterhalten einer zweiten Zuordnung zwischen der ersten VLAN-Kennung und einem Indikator, wobei der Indikator angibt, welcher der Vielzahl von Switches (101, 102, 103, 104, 105, 600) als "Designated Forwarder" von Mehrzielverkehr für die erste Diensttunnelkennung gewählt ist;
Aufrechterhalten einer VLAN-Verteilungstabelle (202), die ein jeweiliges VLAN (212, 214, 216, 218), das einem verteilten Tunnelendpunkt (120) zugeordnet ist, einem entsprechenden Diensttunnel (132, 134) zuordnet, wobei die VLAN-Verteilungstabelle (202) angibt, dass der gewählte aus der Vielzahl von Switches (101, 102, 103, 104, 105, 600) ein Verteilungs-Master (101) ist; und einen Paketprozessor (610), der so ausgelegt ist, dass er einen der Vielzahl von Switches (101, 102, 103, 104, 105, 600) als Replikator für Multicast-Verkehr für den ersten Diensttunnel (132, 134) als Reaktion darauf auswählt, dass der Indikator angibt, dass der eine der Vielzahl von Switches (101, 102, 103, 104, 105, 600) ein "Designated Forwarder" für Mehrzielverkehr für die erste Diensttunnelkennung ist; wobei
der Verteilungs-Master (101) dafür ausgelegt ist, die erste Zuordnung neu zu berechnen und die VLAN-Verteilungstabelle (202) zu aktualisieren, wenn einer der Vielzahl von Switches (101, 102, 103, 104, 105, 600) als Replikator für Multicast-Verkehr für den ersten Diensttunnel (132, 134) ausgewählt wird;
der ausgewählte Replikator so ausgelegt ist, dass er für die Weiterleitung von BUM-Verkehr verantwortlich ist, der zu VLANs (212, 214, 216, 218) gehört, die für den ersten Diensttunnel (132, 134) bestimmt sind; und
der ausgewählte Replikator mit Multicast-Weiterleitungsinformationen für die VLANs (212, 214, 216, 218) ausgelegt ist, die für den ersten Diensttunnel (132, 134) bestimmt sind.

2. Fabric-Switch nach Anspruch 1, wobei Weiterleitungseinträge für Multicast-Gruppenkennungen der VLANs (212, 214, 216, 218), die für den ersten Diensttunnel (132, 134) bestimmt sind, in einer Weiterleitungstabelle des Replikators ausgelegt sind.

3. Fabric-Switch nach einem der vorhergehenden Ansprüche, wobei der Verteilungs-Master (101) ferner so ausgelegt ist, dass er den Replikator für den ersten Diensttunnel (132, 134) auf der Grundlage von einem oder mehreren der folgenden Elemente bestimmt: einer Anzahl von Tunneln (132, 134), der Anzahl von VLANs (212, 214, 216, 218) und einem Verkehrsvolumen eines jeweiligen Tunnels (132, 134).

4. Fabric-Switch nach einem der vorhergehenden Ansprüche, wobei eine Tunnelzuordnungstabelle (204, 206) ein jeweiliges VLAN (212, 214, 216, 218) dem Indikator zuordnet, der angibt, ob einer der Vielzahl von Switches (101, 102, 103, 104, 105, 600) als Replikator für den Tunnel (132, 134) gewählt ist, der dem VLAN (212, 214, 216, 218) zugeordnet ist.

5. Fabric-Switch nach einem der vorhergehenden Ansprüche, wobei mindestens einer der Vielzahl von Switches (101, 102, 103, 104, 105, 600) dafür ausgelegt ist, den Replikator für einen jeweiligen Tunnel (132, 134) in einer VLAN-Verteilungstabelle (202) zuzuordnen.

6. Fabric-Switch nach Anspruch 5, wobei der mindestens eine der Vielzahl von Switches (101, 102, 103, 104, 105, 600) ferner so ausgelegt ist, dass er die VLAN-Verteilungstabelle (202) in eine Benachrichtigungsnachricht aufnimmt und die Benachrichtigungsnachricht an einen zweiten der Vielzahl von Switches (101, 102, 103, 104, 105, 600) weiterleitet.

7. Verfahren, umfassend die folgenden Schritte:
Aufrechterhalten einer ersten Zuordnung zwischen einer ersten Diensttunnelkennung, die einem ersten Diensttunnel (132, 134) zugeordnet ist, und einer ersten "Virtual Local Area Network"-, VLAN-, Kennung, die einem ersten VLAN (212, 214, 216, 218) aus einer Anzahl von VLANs (212, 214, 216, 218) zugeordnet ist;
Aufrechterhalten einer zweiten Zuordnung zwischen der ersten VLAN-Kennung und einem Indikator, wobei der Indikator angibt, ob einer aus einer Vielzahl von Switches (101, 102, 103, 104, 105, 600) als "Designated Forwarder" von Mehrzielverkehr für die erste Diensttunnelkennung gewählt ist;
Aufrechterhalten einer VLAN-Verteilungstabelle (202), die ein jeweiliges VLAN (212, 214, 216, 218), das einem verteilten Tunnelendpunkt (120) zugeordnet ist, einem entsprechenden Diensttunnel (132, 134) zuordnet, wobei die VLAN-Verteilungstabelle (202) angibt, dass der gewählte aus der Vielzahl von Switches (101, 102, 103, 104, 105, 600) ein Verteilungs-Master ist; und
Auswählen eines der Vielzahl von Switches (101, 102, 103, 104, 105, 600) als Replikator für Multicast-Verkehr für den ersten Diensttunnel (132, 134) als Reaktion darauf, dass der Indikator angibt, dass der eine der Vielzahl von Switches (101, 102, 103, 104, 105, 600) ein "Designated Forwarder" für Mehrzielverkehr für die erste Diensttunnelkennung ist; und
Neuberechnen der ersten Zuordnungen und Aktualisieren der VLAN-Verteilungstabelle (202), wenn einer der Vielzahl von Switches (101, 102, 103, 104, 105, 600) als Replikator für Multicast-Verkehr für den ersten Diensttunnel (132, 134) ausgewählt wird; wobei
der ausgewählte Replikator so ausgelegt ist, dass er für die Weiterleitung von BUM-Verkehr verantwortlich ist, der zu VLANs (212, 214, 216, 218) gehört, die für den ersten Diensttunnel (132, 134) bestimmt sind; und
der ausgewählte Replikator mit Multicast-Weiterleitungsinformationen für die VLANs (212, 214, 216, 218) ausgelegt ist, die für den ersten Diensttunnel (132, 134) bestimmt sind.

8. Computersystem, umfassend:
einen Prozessor;
eine Speichervorrichtung (650), die mit dem Prozessor gekoppelt ist und Anweisungen speichert, die bei ihrer Ausführung durch den Prozessor den Prozessor veranlassen, ein Verfahren durchzuführen, wobei das Verfahren folgende Vorgänge umfasst:
Aufrechterhalten einer ersten Zuordnung zwischen einer ersten Diensttunnelkennung, die einem ersten Diensttunnel (132, 134) zugeordnet ist, und einer ersten "Virtual Local Area Network"-, VLAN-, Kennung, die einem ersten VLAN (212, 214, 216, 218) aus einer Anzahl von VLANs (212, 214, 216, 218) zugeordnet ist;
Aufrechterhalten einer zweiten Zuordnung zwischen der ersten VLAN-Kennung und einem Indikator, wobei der Indikator angibt, ob einer aus einer Vielzahl von Switches (101, 102, 103, 104, 105, 600) als "Designated Forwarder" von Mehrzielverkehr für die erste Diensttunnelkennung gewählt ist;
Aufrechterhalten einer VLAN-Verteilungstabelle (202), die ein jeweiliges VLAN (212, 214, 216, 218), das einem verteilten Tunnelendpunkt (120) zugeordnet ist, einem entsprechenden Diensttunnel (132, 134) zuordnet, wobei die VLAN-Verteilungstabelle (202) angibt, dass der gewählte aus der Vielzahl von Switches (101, 102, 103, 104, 105, 600) ein Verteilungs-Master ist; und
Auswählen eines der Vielzahl von Switches (101, 102, 103, 104, 105, 600) als Replikator für Multicast-Verkehr für den ersten Diensttunnel (132, 134) als Reaktion darauf, dass der Indikator angibt, dass der eine der Vielzahl von Switches (101, 102, 103, 104, 105, 600) ein "Designated Forwarder" für Mehrzielverkehr für die erste Diensttunnelkennung ist; und
Neuberechnen der ersten Zuordnungen und Aktualisieren der VLAN-Verteilungstabelle (202), wenn einer der Vielzahl von Switches (101, 102, 103, 104, 105, 600) als Replikator für Multicast-Verkehr für den ersten Diensttunnel (132, 134) ausgewählt wird; wobei
der ausgewählte Replikator so ausgelegt ist, dass er für die Weiterleitung von BUM-Verkehr verantwortlich ist, der zu VLANs (212, 214, 216, 218) gehört, die für den ersten Diensttunnel (132, 134) bestimmt sind; und
der ausgewählte Replikator mit Multicast-Weiterleitungsinformationen für die VLANs (212, 214, 216, 218) ausgelegt ist, die für den ersten Diensttunnel (132, 134) bestimmt sind.

## Revendications

1. Commutateur matriciel (100), comprenant :
une pluralité de commutateurs (101, 102, 103, 104, 105, 600) ;
un dispositif de stockage (650) ;
un module de mise en correspondance (620) conçu pour :
maintenir, dans le dispositif de stockage, une première mise en correspondance entre un premier identifiant de tunnel de service associé à un premier tunnel de service (132, 134) et un premier identifiant de réseau local virtuel, VLAN, associé à un premier VLAN (212, 214, 216, 218) parmi un certain nombre de VLAN (212, 214, 216, 218) ;
maintenir une deuxième mise en correspondance entre le premier identifiant de VLAN et un indicateur, dans lequel l'indicateur indique lequel de la pluralité de commutateurs (101, 102, 103, 104, 105, 600) est élu comme transitaire désigné de trafic multidestination pour le premier identifiant de tunnel de service ;
maintenir une table de distribution de VLAN (202) qui met en correspondance un VLAN (212, 214, 216, 218) respectif associé à un point d'extrémité de tunnel distribué (120) avec un tunnel de service correspondant (132, 134), dans lequel la table de distribution de VLAN (202) indique que le commutateur élu parmi la pluralité de commutateurs (101, 102, 103, 104, 105, 600) est un maître de distribution (101) ; et
un processeur de paquets (610) conçu pour sélectionner l'un de la pluralité de commutateurs (101, 102, 103, 104, 105, 600) en tant que réplicateur pour le trafic de multidiffusion pour le premier tunnel de service (132, 134) en réponse à l'indicateur indiquant que l'un de la pluralité de commutateurs (101, 102, 103, 104, 105, 600) est un transitaire désigné de trafic multidestination pour le premier identifiant de tunnel de service ; dans lequel
le maître de distribution (101) est conçu pour recalculer la première mise en correspondance et pour mettre à jour la table de distribution VLAN (202), lorsqu'un de la pluralité de commutateurs (101, 102, 103, 104, 105, 600) est sélectionné comme réplicateur pour le trafic de multidiffusion pour le premier tunnel de service (132, 134) ;
le réplicateur sélectionné est configuré pour être responsable de l'acheminement du trafic BUM appartenant aux VLAN (212, 214, 216, 218) désignés pour le premier tunnel de service (132, 134) ; et
le réplicateur sélectionné est configuré avec des informations d'acheminement de multidiffusion pour les VLAN (212, 214, 216, 218) désignés pour le premier tunnel de service (132, 134).

2. Commutateur matriciel selon la revendication 1, dans lequel les entrées d'acheminement pour les identifiants de groupe multidiffusion des VLAN (212, 214, 216, 218) désignés pour le premier tunnel de service (132, 134) sont configurées dans une table d'acheminement du réplicateur.

3. Commutateur matriciel selon l'une des revendications précédentes, dans lequel le maître de distribution (101) est en outre conçu pour déterminer le réplicateur pour le premier tunnel de service (132, 134) sur la base d'un ou plusieurs des éléments suivants : un nombre de tunnels (132, 134), le nombre de VLAN (212, 214, 216, 218), et un volume de trafic d'un tunnel (132, 134) respectif.

4. Commutateur matriciel selon l'une des revendications précédentes, dans lequel une table de mise en correspondance de tunnel (204, 206) met en correspondance un VLAN (212, 214, 216, 218) respectif avec l'indicateur qui indique si l'un de la pluralité de commutateurs (101, 102, 103, 104, 105, 600) est élu comme réplicateur pour le tunnel (132, 134) mis en correspondance avec le VLAN (212, 214, 216,218).

5. Commutateur matriciel selon l'une des revendications précédentes, dans lequel au moins un de la pluralité de commutateurs (101, 102, 103, 104, 105, 600) est conçu pour mettre en correspondance le réplicateur pour un tunnel (132, 134) respectif dans une table de distribution de VLAN (202).

6. Commutateur matriciel selon la revendication 5, dans lequel au moins un commutateur parmi la pluralité de commutateurs (101, 102, 103, 104, 105, 600) est en outre conçu pour inclure la table de distribution de VLAN (202) dans un message de notification et pour transmettre le message de notification à un deuxième commutateur parmi la pluralité de commutateurs (101, 102, 103, 104, 105, 600).

7. Procédé comprenant les étapes consistant à :
maintenir une première mise en correspondance entre un premier identifiant de tunnel de service associé à un premier tunnel de service (132, 134) et un premier identifiant de réseau local virtuel, VLAN, associé à un premier VLAN (212, 214, 216, 218) parmi un certain nombre de VLAN (212, 214, 216, 218) ;
maintenir une deuxième mise en correspondance entre le premier identifiant de VLAN et un indicateur, dans lequel l'indicateur indique si l'un d'une pluralité de commutateurs (101, 102, 103, 104, 105, 600) est élu en tant que transitaire désigné de trafic multidestination pour le premier identifiant de tunnel de service ;
maintenir une table de distribution de VLAN (202) qui met en correspondance un VLAN (212, 214, 216, 218) respectif associé à un point d'extrémité de tunnel distribué (120) avec un tunnel de service correspondant (132, 134), dans lequel la table de distribution de VLAN (202) indique que le commutateur élu parmi la pluralité de commutateurs (101, 102, 103, 104, 105, 600) est un maître de distribution ;
sélectionner un parmi la pluralité de commutateurs (101, 102, 103, 104, 105, 600) comme réplicateur pour le trafic de multidiffusion pour le premier tunnel de service (132, 134) en réponse à l'indicateur indiquant que l'un de la pluralité de commutateurs (101, 102, 103, 104, 105, 600) est un transitaire désigné de trafic multidestination pour le premier identifiant de tunnel de service ; et
recalculer les premières mises en correspondance et mettre à jour la table de distribution de VLAN (202), lorsqu'un de la pluralité de commutateurs (101, 102, 103, 104, 105, 600) est sélectionné comme réplicateur pour le trafic de multidiffusion pour le premier tunnel de service (132, 134) ; dans lequel le réplicateur sélectionné est conçu pour être responsable de l'acheminement du trafic BUM appartenant aux VLAN (212, 214, 216, 218) désignés pour le premier tunnel de service (132, 134) ; et
le réplicateur sélectionné est configuré avec des informations d'acheminement de multidiffusion pour les VLAN (212, 214, 216, 218) désignés pour le premier tunnel de service (132, 134).

8. Système informatique comprenant :
un processeur ;
un dispositif de stockage (650) couplé au processeur et stockant des instructions qui, lorsqu'elles sont exécutées par le processeur, amènent le processeur à exécuter un procédé, le procédé comprenant :
maintenir une première mise en correspondance entre un premier identifiant de tunnel de service associé à un premier tunnel de service (132, 134) et un premier identifiant de réseau local virtuel, VLAN, associé à un premier VLAN (212, 214, 216, 218) parmi un certain nombre de VLAN (212, 214, 216, 218) ;
maintenir une deuxième mise en correspondance entre le premier identifiant de VLAN et un indicateur, dans lequel l'indicateur indique si l'un d'une pluralité de commutateurs (101, 102, 103, 104, 105, 600) est élu en tant que transitaire désigné de trafic multidestination pour le premier identifiant de tunnel de service ;
maintenir une table de distribution de VLAN (202) qui met en correspondance un VLAN (212, 214, 216, 218) respectif associé à un point d'extrémité de tunnel distribué (120) avec un tunnel de service (132, 134) correspondant, dans lequel la table de distribution de VLAN (202) indique que le commutateur élu parmi la pluralité de commutateurs (101, 102, 103, 104, 105, 600) est un maître de distribution ;
sélectionner un parmi la pluralité de commutateurs (101, 102, 103, 104, 105, 600) comme réplicateur pour le trafic de multidiffusion pour le premier tunnel de service (132, 134) en réponse à l'indicateur indiquant que l'un de la pluralité de commutateurs (101, 102, 103, 104, 105, 600) et un transitaire désigné de trafic multidestination pour le premier identifiant de tunnel de service ; et
recalculer les premières mises en correspondance et mettre à jour la table de distribution de VLAN (202), lorsqu'un de la pluralité de commutateurs (101, 102, 103, 104, 105, 600) est sélectionné comme réplicateur pour le trafic de multidiffusion pour le premier tunnel de service (132, 134) ; dans lequel le réplicateur sélectionné est conçu pour être responsable de l'acheminement du trafic BUM appartenant aux VLAN (212, 214, 216, 218) désignés pour le premier tunnel de service (132, 134) ; et
le réplicateur sélectionné est configuré avec des informations d'acheminement de multidiffusion pour les VLAN (212, 214, 216, 218) désignés pour le premier tunnel de service (132, 134).
